# EUROPEAN PATENT SPECIFICATION

(11) **EP 1 851 522 B1**
(45) Date of publication and mention of the grant of the patent: **28.12.2011**
(21) Application number: 06716585.2
(22) Date of filing: 25.01.2006
(51) Int. Cl.: G01L 1/12, G01L 5/00

(54) **SYSTEM AND METHOD FOR AT LEAST DETECTING A MECHANICAL STRESS IN AT LEAST A PART OF A RAIL**
SYSTEM UND VERFAHREN MINDESTENS ZUM DETEKTIEREN EINER MECHANISCHEN BELASTUNG IN MINDESTENS EINEM TEIL EINER SCHIENE
SYSTEME ET PROCEDE PERMETTANT AU MOINS DE DETECTER UNE CONTRAINTE MECANIQUE DANS AU MOINS UNE PARTIE DE RAIL

(30) Priority: 26.01.2005 NL 1028123; 05.04.2005 NL 1028698
(43) Date of publication of application: 07.11.2007
(73) Proprietor: Grontmij Nederland B.V., 3732 HM De Bilt (NL)
(72) Inventor: NOBACK, Herman Roelof, NL-9746 PX Groningen (NL)
(74) Representative: Hatzmann, Martin
(86) International application number: PCT/NL2006/000039
(87) International publication number: WO 2006/080838

(56) References cited:
- WO-A-2004/077003
- FR-A- 2 564 585
- GB-A- 2 202 630
- PATENT ABSTRACTS OF JAPAN vol. 008, no. 072 (P-265), 4 April 1984 (1984-04-04) & JP 58 216924 A (HITACHI ELECTRONICS ENG. CO. LTD.), 16 December 1983 (1983-12-16)
- PATENT ABSTRACTS OF JAPAN vol. 009, no. 133 (P-362), 8 June 1985 (1985-06-08) & JP 60 017330 A (JAPAN NATIONAL RAILWAY ET AL.), 29 January 1985 (1985-01-29)

## Description

The invention relates to a system and a method for at least detecting a mechanical stress in at least a part of a rail, for instance a rail for guiding means of transport.

The above-mentioned system and the above-mentioned method are known per se. A train which experiences the effects of stress in a rail, such as deformation of the rail, when the train moves forward over this rail, can be understood as an example of an above-mentioned system and an above-mentioned method. Such effects may, for instance, comprise an increased resistance experienced by the train when it moves forward over the rail. The method usually also comprises the visual detection of deformation of the rail as a result of the presence of a mechanical stress in at least a part of the rail.

Currently, nearly always jointless tracks are used. That is, there are no interruptions in the rails of the track. A result is that particularly temperature changes and the driving of, for instance, trains cause a tensile stress or compressive stress in the rail.

Forces developing in the rail can cause "rail buckling". This is a phenomenon which occurs when a longitudinal force in the rail is so great that a ballast bed connected with the rail, and/or the fixation to, for instance, the cross ties and/or the rail's own shear resistance cannot prevent the rail from reaching its buckling point. The buckling point is the point at which a virtually straight object can no longer remain straight due to the pressure exerted thereon in longitudinal direction, but will bend (buckle). The buckling usually takes place suddenly, and rail buckling is an example thereof. The magnitude of the force needed to make a rail buckle depends, for instance, on how straight a rail lies, how much lateral resistance the ballast bed can offer, and the amount of cross ties connected with the rail, per unit of length of the rail.

The system, the method and the phenomenon of "rail buckling" as described hereinabove signal the occurrence of mechanical stresses at much too late a stage of the phenomena occurring as a result of mechanical stresses.

There is a need for a system and a method for detecting mechanical stresses in at least a part of a rail at an early stage, so that the rail can be replaced if desired, or can be adjusted otherwise before buckling of the rail takes place. This is because, when bucking takes place, the rail is often suddenly no longer usable, which has unpleasant consequences for *inter alia* users of the rail.

Further, there is a need for a system and a method for measuring a global force in a longitudinal direction of a rail, i.e. a resulting external force acting on the rail in the longitudinal direction. Here, measuring local stresses and/or local stress variations in the rail may be of secondary importance.

The object of the invention is to meet at least one of such needs.

This object is achieved by providing a system for detecting a mechanical stress in a respective part of a rail on the basis of magnetizability of that part of a rail according to claim 1.

The magnetizability of the respective part of a rail is a property which can be determined without the respective part of the rail needing to be moved, and without any mechanical stresses which are present in the respective part of the rail being substantially influenced. The invention follows from the insight that the so-called Villari effect will occur in rails. In short, in this context, this effect comprises that the magnetizability of a rail, as observed through Villari, is influenced by mechanical stresses which are present in the rail.

In particular, it holds that the system according to the invention is provided with a magnetic field generator for generating a predetermined magnetic field such that the respective part of a rail is located in that field. Further, the system is preferably provided with a measure system for determining a response of the respective part of a rail to its being located in that magnetic field. Such an embodiment allows a simple construction of the system from two separate systems which may each be designed in various manners, for instance depending on the situation. This is favorable to the flexibility of a system according to the invention.

In particular, it holds that a magnetic field generator comprises at least one electrically conductive turn. This offers the advantage that the magnitude of the magnetic field to be generated can accurately be determined. This is because the strength of a magnetic field inside, for instance, a coil is proportional to the number of turns and to the strength of an electrical current to be fed through these turns.

It holds that the at least one turn is arranged to be placed, at least partly, around the rail. This often the advantage that the rail is located in a position where the magnetic field can be considered known and optimally defined. As a result, the so-called Villari effect can be determined as well as possible so that even a relatively low mechanical stress can be detected and an accurate determination of a relatively high mechanical stress becomes possible.

WO 2004/077003 relates to a method for determining the residual stress and the thermally-induced stress in a rail using a probe comprising an electromagnet means, means to generate an alternating magnetic field in the electromagnet means and consequently in the rail, and a magnetic sensor arranged to sense a magnetic field due to the electromagnet means. WO 2004/077003, however, does not disclose a magnetic field generator comprising at least one electrically conductive turn arranged to be able to be placed at least partly around the rail.

Preferably, the magnetic field generator is arranged for generating a magnetic field extending in a predetermined direction with respect to the respective part of the rail. This offers the advantage that the system can have a simple design, and that the direction in which mechanical stresses which are present can be determined can be predetermined in a simple manner.

The magnetic field generator may be arranged for generating a magnetic field extending substantially parallel to a longitudinal direction of the respective part of a rail, i.e. in a predetermined direction with respect to the respective part of the rail. In this context, a magnetic field extending in a determined direction is understood to mean that magnetic field lines extend more or less parallel to that determined direction. This allows the determination of a compressive or tensile force substantially directed parallel to the longitudinal direction of the respective part of the rail, since the magnetizability (magnetic induction) of the rail in the direction of the magnetic field, which depends on the mechanical stresses which are present, can be determined.

It will be clear that the measuring system preferably determines the magnetic induction in the direction of the magnetic field generated by the magnetic field generator. To this end, the measuring system is arranged for measuring the magnetic induction in the respective part of the rail in the direction of the magnetic field generated by the magnetic field generator. This offers the advantage that the system can have a simple design, while the measuring system and the magnetic field generator can have a fixed orientation with respect to each other and/or while the measuring system and/or the magnetic field generator can have a fixed orientation with respect to the respective part of the rail.

It is possible that at least a part of the turn comprises an electrically conductive plate part. Such a plate part may simply be placed below, or above, the rail between supports of the respective part of the rail. Further, determining a distance between the turn and the rail is fairly unambiguous, which is favorable to the reproducibility of the measurement on, for instance, different parts of the rail.

In a special embodiment, it holds that the magnetic field generator is arranged for generating a magnetic field extending substantially transverse to a longitudinal direction of the respective part of the rail, i.e. in a predetermined direction with respect to the respective part of the rail. This offers the advantage that the magnetization in a direction transverse to a longitudinal direction of the respective part can be used for determining a mechanical stress in the longitudinal direction. In addition, this offers the advantage that, for measuring different, aligned parts of a rail located on either side of supports, the magnetic field not necessarily needs to be interrupted. Also, it does not need to be necessary that the magnetic field generator is to be adjusted upon moving the magnetic field generator between two parts located on either side of the support of the rail.

The magnetic field generator may comprise at least opposite poles of a magnet. Here, use may, for instance, be made of one or more permanent magnets. This offers the advantage that the magnetic field generator can have a robust design. Further, the magnetic field generator does not depend on a power supply for supplying electrical energy. Such a magnetic field generator is particularly advantageous for generating a magnetic field extending in a transverse direction, i.e. in a direction transverse to the longitudinal direction of the respective part of a rail.

However, it is also possible for the magnetic field generator to comprise an electromagnet. This offers the advantage that the strength of the magnetic field is settable, for instance with the aid of the current intensity. Such a magnetic field generator is particularly advantageous for generating a magnetic field extending in a longitudinal direction of the rail.

It is possible for the measuring system to be arranged for determining magnetic induction in the respective part of the rail. Thus, the response of the rail to its being located in the magnetic field is determined directly. In this case, derived effects with relations between the magnetic induction and the derived effect are not in order and therefore preclude potential systematic and/or other errors.

It is possible for the measuring system to be provided with a measuring coil for measuring a magnetic induction in the respective part of the rail. The position of the measuring coil with respect to the respective part of the rail can be determined very accurately, which is favorable to the reproducibility of the measurement. It is further possible to combine providing the measuring coil with providing a turn of a magnetic field generator. This makes the number of operations to be carried out for at least detecting a mechanical stress easy to keep track of.

The measuring system may be provided with a voltmeter for measuring a voltage over the measuring coil. The voltmeter is a relatively inexpensive instrument and is universally available.

It preferably holds that the system is provided with at least one magnetizable reference object with a predetermined magnetizability. This allows a relative determination of mechanical stresses in the respective part of the rail. This is because the relative magnetic induction, the induction in the respective part of the rail in relation to the induction in the reference object, can be determined. It further holds that, in such an embodiment, determination of a current intensity by the turn of the magnetic field generator is not necessary.

The measuring system may comprise a reference measuring coil for determining the magnetic induction in the reference object. Optionally, providing this reference measuring coil may also be combined with providing the turn of the magnetic field generator and providing the measuring coil which determines the magnetic induction in the respective part of the rail. Further, it also holds that the position of the reference measuring coil with respect to the reference object can be determined relatively accurately. This is also favorable to the reproducibility. In that case, the relative measurement of the mechanical stresses can be carried out in a more accurate and reproducible manner.

In a special embodiment, it holds that at least a part of the magnetic field generator and at least a part of the measuring are substantially movable in a longitudinal direction of the respective part of the rail along a predetermined path such that successive parts of the rail are successively in the magnetic field, and that, of these successive parts, the responses to their being located in the magnetic field can be determined. Thus, in an efficient and reproducible manner, on many mutually different parts of the rail, it can be determined whether mechanical stresses are present in the respective parts of the rail. It is also possible to determine the mechanical stresses relative to one another. That is, a stress curve related to a longitudinal direction of the rail will be obtained in that case. So-called peak stresses can then be observed relatively simply.

It is, for instance, possible for the system to be provided with a mobile device for wheeling at least a part of the magnetic field generator and at least a part of the measuring system along the rail and optionally over the rail such that successive parts of the rail are successively in the magnetic field, and that, of these successive parts, the responses to their being located in the magnetic field can be determined. It is also possible for the system to be movable along a "rail" which has, for instance, been built exclusively for guiding the system. This latter embodiment offers the advantage that the rail in which the mechanical stresses are to be determined is still available for guiding the means of transport for which this rail was originally intended.

The measuring system may be provided with a magnet which is movable in a longitudinal direction of the rail for at least detecting a force acting in the longitudinal direction of the rail which is exerted on the movable magnet in the longitudinal direction of the rail by the part of the rail located in the predetermined magnetic field. On the basis of this force, the magnetizability of the rail can be determined and therefrom the mechanical stress can be determined. An advantage of such an embodiment is that the system can be designed to have a virtually completely mechanical nature. The system needs not necessarily to be provided with an electrical power supply and/or electronic measuring equipment. It follows from this that the system can be designed such that it can be used in virtually all weather conditions. In such an embodiment, it is possible that the movably arranged magnet is connected with a spring for detecting the force. As a result, such a system can have a very inexpensive design.

In a special embodiment, it holds that parts of the at least one turn can be placed in a first relative position and in at least one second relative position, while, in the first relative position, the parts can assume such a predetermined position with respect to a part of a rail that that part of a rail can operatively be included in a predetermined magnetic field, and while, in the at least one second relative position, direct replacement of the at least one turn with the parts again in the first relative position is possible with a part of another rail.

An embodiment of such at least one turn can at least virtually completely enclose the rail between two supports of the rail. After generating the magnetic field and determining the response of the respective part included in the magnetic field, the at least one turn can brought into the second position. This second position allows the at least one turn to be moved from a part of the rail enclosed by a turn of the magnetic field generator, which part is located on one side of a support, to a part of the rail located on another side of that support.

It is possible for the respective parts of the at least one turn to be connected with one another in both the first position and in the at least one second position. As a result, moving the at least one turn can be a fairly uncomplicated and simple operation.

In particular, it may hold that the at least one turn comprises a hinge connection. This further facilitates a simple operation of moving the at least one turn from a part of the rail located on one side of a support to a part of the rail located on another side of that support. In particular, it holds that the respective parts of the at least one turn together form a continuous whole in the first relative position and form an interrupted whole in the at least one second position. Thus, a magnetic field may be generated in a direction parallel to a longitudinal direction of the rail. This is because the at least one turn can be provided around the rail. The respective parts of the turn are then in the first relative position and can be considered a whole closed upon itself. If necessary, the at least one turn can be removed again. The respective parts of the at least one turn are then brought into one of the second relative positions, the whole originally closed upon itself being interrupted. The respective parts can then be provided elsewhere around the rail again. It is still one of the possibilities of such a system to generate the magnetic field on other parts of the rail as well with the aid of the same system without requiring too many complicated operations.

It is also possible that parts of the measuring system can be placed in a first relative position and in at least one second relative position, while, in the first relative position, those parts can assume a predetermined position with respect to a part of the rail and while, in the at least one second relative position, a distance between the parts of the measuring system in a predetermined direction is larger than the distance between those parts in the first relative position. This also creates the possibility that, in the first position, the measuring system can adequately determine a response of the part of the rail located in a magnetic field by enclosing that part tightly. Then, the respective parts of the measuring system can be brought into a second position and thus be removed from the respective part in order to then be provided at, for instance, another part of the rail.

Here, it may also hold that the respective parts of the measuring system remain connected with one another in both the first and the at least one second position. This can create a very conveniently arranged measuring system. The respective parts of the measuring system are very well manageable. It is also possible for the measuring system to comprise a hinge connection. Further, it may also hold that parts of the measuring system together form a continuous whole in the first relative position and form an interrupted whole in the second position.

In a further embodiment, it may hold that the system is provided with a speedometer for determining a speed of movement at which the predetermined magnetic field operatively moves in a longitudinal direction of the respective part of the rail. This embodiment is advantageous when this embodiment is combined with the above-discussed embodiment in which the magnetic field generator and the measuring system are movable along a predetermined path such that successive parts of the rail are successively located in the magnetic field, and in which the responses of these successive parts on their being located in the magnetic field can be determined. The measurement data may, for instance, be stored as a function of time. When the starting position and the speed of the system are known, the measurement data can be related to positions on parts of the rail.

In particular, it may hold that the system is provided with a mobile device for wheeling at least a part of the magnetic field generator and at least a part of the measuring system along the rail and optionally over the rail such that successive parts of the rail are successively located in the magnetic field and that the responses of these successive parts on their being located in the magnetic field can be determined. This allows an accurate location. The magnetic field generator and the measuring system can accurately be positioned with respect to each respective part of the rail. Further, this allows a relatively quick method for detecting mechanical stresses in a longitudinal part of a rail.

It may further hold that the system is arranged for quantitatively determining the presence of a mechanical stress in a part of the rail. Here, use may be made of a predetermined relation between a response of the part of the rail located in a magnetic field and a mechanical stress which is present. In particular, it holds that this is relatively well known for the magnetic induction in the mechanical stress. Further, this relation can be predetermined experimentally.

The invention further relates to a method for at least detecting a mechanical stress in at least a part of a rail. In particular, it may hold that the rail comprises a train rail.

The invention is now explained in more detail with reference to a drawing, in which:
Fig. 1 schematically shows a first embodiment of the system according to the invention;
Fig. 2 schematically shows a second embodiment of a system according to the invention;
Fig. 3 schematically shows a third embodiment of the system according to the invention;
Fig. 4 schematically shows a part of a fourth embodiment of the system according to the invention;
Fig. 5a schematically shows a part of a fifth embodiment of a system according to the invention;
Fig. 5b schematically shows the part shown in Fig. 5a of the fifth embodiment of the invention;
Fig. 6a schematically shows a part of a sixth embodiment of a system according to the invention;
Fig. 6b schematically shows the part shown in Fig. 6a of the sixth embodiment of the invention;
Fig. 7a schematically shows a part of a seventh embodiment of a system according to the invention; and
Fig. 7b schematically shows a side-elevational view of a part of the seventh embodiment of a system according to the invention.

In the drawing, same parts have same reference symbols.

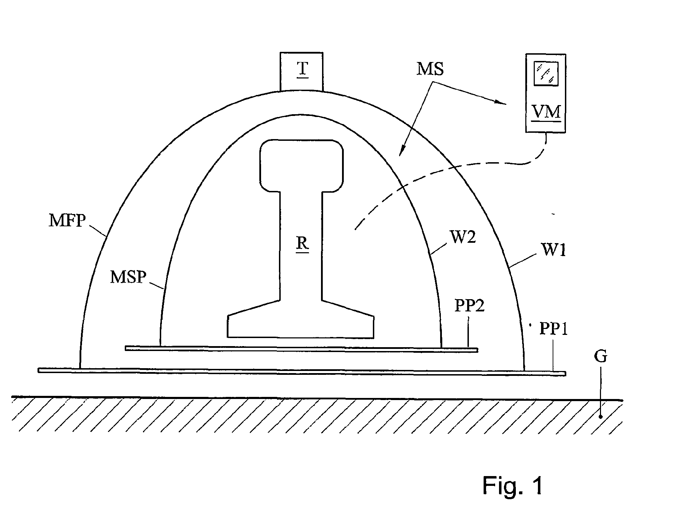

Fig. 1 shows a first embodiment of a system for at least detecting a mechanical stress in at least a part R of a rail. This may, for instance, be a rail for guiding means of transport such as for instance a train. However, it may also be a rail used for transporting a subway train, streetcar or even a "monorail". The means of transport is usually on the rail and there is usually a set of two rails. However, it is not precluded that the system and the method for at least detecting the mechanical stress in a part of the rail as will be described hereinafter can also be used for a rail from which a means of transport is suspended.

Although the system is at least arranged for, optionally relatively, detecting a presence of a mechanical stress, the system is preferably arranged for determining a mechanical stress qualitatively and still more preferably even quantitatively.

The system is arranged for detecting and optionally quantifying a mechanical stress in a respective part of a rail on the basis of magnetizability of that part. To that end, the system is provided with a magnetic field generator MFP for generating a predetermined magnetic field such that the respective part R of a rail is located in that field. The system is further provided with a measuring system MS for determining a response of the respective part R of a rail to its being located in the magnetic field. To this end, a changing magnetic field is present in the respective part of the rail.

As shown in Fig. 1, the magnetic field generator MFP may, for instance, comprise one or more electrically conductive turns W1. In this turn, a transformer T may be included for supplying the current required. There will usually be a plurality of electrically conductive turns. It is possible that one turn "goes through" the transformer and two turns around the rail. When an electrical current is fed through the electrically conductive turn W1, a magnetic field H is generated within the turns. The strength of the magnetic field is proportional to the number of turns W1 and the strength of the current fed through. The magnetic field generator may be provided with a current meter (not shown) for determining the current intensity fed through the turns W1. A current meter may also, or alternatively, be part of the measuring system to be discussed in more detail. The embodiment shown in Fig. 1 is arranged for generating a magnetic field extending substantially parallel to the longitudinal direction of the respective part R of the rail. It will be clear that, here in this example, the magnetic field generator is positioned statically. It will further be clear that the magnetic field thus extends in a predetermined direction with respect to the respective part R of the rail. For Fig. 1, it holds that the longitudinal direction of the respective part R of the rail is perpendicular to the plane in which Fig. 1 is shown. As can be seen, in this example, it holds that the turn shown is arranged to be placed around the rail. This is usually possible since parts R of the rail are located above the base G and there is often a free space between the rail and the base G.

It is possible for at least a part of the turn W1 to comprise an electrically conductive plate part PP1. As drawn, this place may have a straight design. However, it is not precluded that this plate PP1 is also, at least partly, provided with a curve. Herein, plate part is understood to mean a part which is suitable for feeding an electrical current, such as a bar, strip, tube, section and/or cable.

The measuring system MS is preferably arranged for determining magnetic induction in the respective part of the rail R. In the example shown in Fig. 1, the measuring system is provided with a measuring coil MSP for measuring the change of magnetic induction B in the respective part R of the rail. The respective part of the rail R is understood to mean the part of the rail R of which the mechanical stress is to be determined. As can be seen, in this example, it holds that the measuring coil shown is arranged to be placed around the rail, and that the measuring coil has the same orientation with respect to the rail as the turn of the magnetic field generator. The measuring coil thus encloses the respective part of the rail. Thus, the measuring coil further has a predetermined orientation with respect to the respective part of the rail. It will be clear that, here in this example, the measuring coil is positioned statically. The measuring system is therefore arranged for measuring the magnetic induction in the direction of the predetermined magnetic field generated by the magnetic field generator. In this example, the measuring system is therefore arranged for determining the magnetic induction in the respective part of the rail in the longitudinal direction of the respective part of the rail. The measuring coil MSP may comprise one or more turns W2. These are again electrically conductive turns W2. The measuring system is provided with a voltmeter VM for measuring a voltage over the measuring coil MSP. This voltage is proportional to the change in the magnetic induction per time unit and can be determined with the aid of formulas very well known per se to a skilled person.

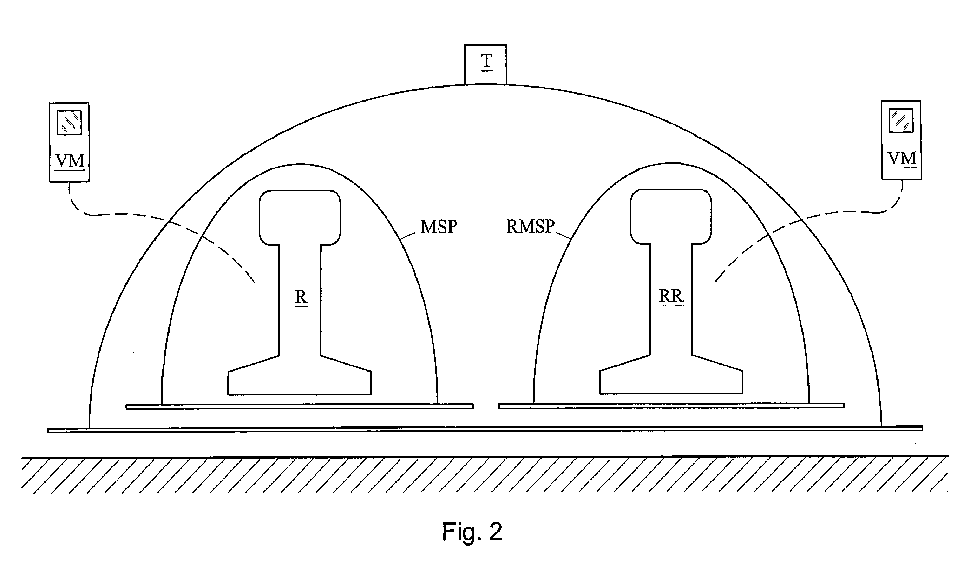

Fig. 2 shows a second embodiment of a system according to the invention. In this example, the system is provided with a magnetizable reference object with an optionally predetermined magnetizability corresponding with the magnetizability of the rail to be examined. This may, for instance, be a part RR of a rail which is not used as a rail. Preferably, this part RR is of the same "batch" as the rail of which it does need to be measured what stresses occur therein. The reference object may, for instance, have a stressless design and/or may be used for determining a magnetization such as it is possible with a part RR of a rail not exposed to the conditions to which a rail is exposed in operative condition. In such an embodiment, it is possible to determine the magnetizability of the rail R in relation to the magnetizability of the reference rail RR. This offers the advantage that it is no longer necessary to determine the current through the one or more turns W1 of the magnetic field generator MFP, which current is, for instance, high and/or difficult to measure accurately in practice. When there is an alternating current, the frequency is no longer important either. In the embodiment shown in Fig. 2, the measuring system further comprise a reference measuring coil RMSP for determining the magnetic induction in the reference object RR. As can be seen, in this example, it holds that the measuring coil MSP, the reference measuring coil RMSP and the turn of the magnetic field generator MFP are arranged to be placed around the rail. It can also be seen that the measuring coil MSP has the same orientation with respect to the respective part of the rail as the turn of the magnetic field generator. It can further be seen that the reference measuring coil RMSP has the same orientation with respect to the respective part of the reference rail as the turn of the magnetic field generator. It will be clear that, in this example, the magnetic field generator, the measuring coil and the reference measuring coil are positioned statically. There may be one voltmeter VM which alternately measures a voltage over a measuring coil MSP and the voltage over reference measuring coil RMSP. There may also be two voltmeters, one of which being arranged to measure the voltage over a measuring coil MSP and one of which being arranged to measure the voltage over RMSP.

It is also possible that the embodiment shown in Fig. 1 is further provided with a measuring system arranged for measuring the magnetic induction in the direction transverse to the longitudinal direction of the respective part of the rail, and optionally with a second magnetic field generator, which generates a magnetic field extending in a direction transverse to the longitudinal direction of the respective part of the rail. Since the magnetizability of the rail in the direction transverse to the longitudinal direction of the respective part of the rail does not or hardly change and/or changes differently from the magnetizability in the longitudinal direction of the respective part of the rail as a result of mechanical stresses in the longitudinal direction of the respective part of the rail, the magnetic induction in the direction transverse to the longitudinal direction of the respective part of the rail can be used as a reference value for a stressless situation in the respective part of the rail. Thus, no separate reference object is necessary.

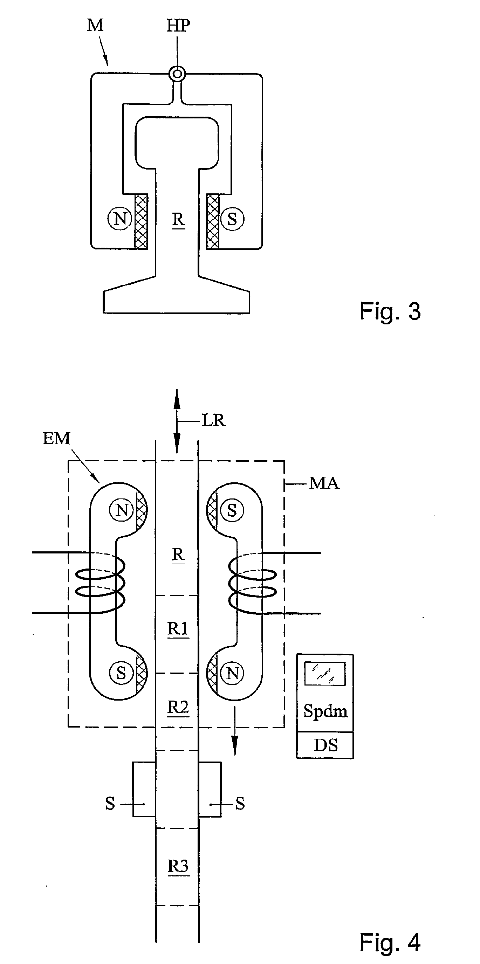

Fig. 3 shows an embodiment in which the magnetic field generator MFP comprises at least two opposite poles of a magnet M. The magnet may comprise a permanent magnet. In that case, the magnetization may be determined with so-called Hall elements known to a skilled person. However, it is also possible for the magnet to comprise an electromagnet EM. An example thereof is shown in Fig. 4. These are examples of a system according to the invention in which preferably at least a part of the magnetic field generator MFP is movable in a longitudinal direction LR of the respective part R of a rail along a predetermined path. In that case, successive parts R1, R2 etc. are successively located in the magnetic field operatively generated by the magnetic field generator MFP. For the sake of completeness, it is noted that Fig. 4 shows a top plan view of a rail R. An embodiment as shown in Fig. 4, or in a broader sense, an embodiment in which the magnetic field generator is arranged for generating a magnetic field extending substantially transverse to a longitudinal direction of the respective part of a rail and in which at least a part of the magnetic field generator MFP is movable in a longitudinal direction LR of the respective part R of a rail along a predetermined path creates the possibility of a simple determination of a change of mechanical stresses in a longitudinal direction of a rail. To this end, the magnetic field generator needs to be movable in longitudinal direction of the rail substantially such that successive parts of the rail are successively located in the magnetic field. It will be clear that, here, the magnetic field extends in a predetermined direction with respect to the respective part R of the rail.

The determination of the change may take place as follows. The magnetic field generator moves at a speed which is higher than or equal to a predetermined speed along the rail. Thus, each part of the rail will have been placed locally in a magnetic field changing in time. The predetermined speed is the minimum speed at which eddy currents occur in the rail. These eddy currents inhibit the magnets. The eddy currents counteract the cause of their existence (Lenz's law). A force occurring in the longitudinal direction of the rail and acting on the magnetic field generator depends on both the speed at which the magnetic field generator moves along the rail and the magnetizability of the respective part of the rail.

As schematically shown in Fig. 4, the system may be provided with a speedometer SPDM for determining a speed of movement at which at least a part of the system and accordingly the magnetic field moves in a longitudinal direction of the respective part R of the rail. Thus, the speed at which the magnetic field generator moves along the respective part of the rail can be measured and/or be controlled.

The inhibition can be determined in various manners. Thus, the power needed to move the magnetic field generator along the rail at a constant speed can be determined. When the magnetic field generator is provided with permanent magnets, these may, for instance, be movably arranged in a longitudinal direction of the rail with respect to, for instance, be a mobile device MA moving forward along a predetermined path along the rail during the determination. Thus, the magnets may, for instance, connected to this mobile device MA by means of springs substantially in the longitudinal direction of the respective part of the rail. The changing spring force may be measured and may be a measure for the change of the mechanical stresses in the rail which are detectable in this manner when the magnetic field generator is moved forward along the rail. Instead of springs, strain gauges can also be used or any other device or method which is easy to use for a skilled person for measuring a force exerted on the magnetic field generator in the longitudinal direction of the respective part of the rail.

In a special embodiment, the system is arranged for moving the magnetic field generator at an, optionally predetermined, constant speed along the respective part of the rail, which magnetic field generator generates a predetermined magnetic field directed transverse to the longitudinal direction of the respective part of the rail, while the system is arranged for measuring a force exerted on the magnetic field generator in the longitudinal direction of the respective part of the rail. The measured force is a measure for the magnetizability of the respective part of the rail, and accordingly the mechanical stress in the respective part of the rail, in the longitudinal direction of the respective part of the rail.

So, in such an embodiment, the magnetic field generator may also be part of the measuring system.

It is possible that, in the example of Fig. 3 or 4, the magnetic field generator is movably arranged in a direction transverse to a longitudinal direction of the rail with respect to, for instance, a mobile device MA, for instance hingeable about a hinge point HP, for instance for being able to avoid obstacles.

It will be clear from the above, and from the Figures, that the magnetic field generator may be arranged for generating a magnetic field extending in a predetermined direction with respect to the respective part of the rail. In particular, to this end, the magnetic field generator, more in particular a turn of the magnetic field generator, has a predetermined orientation with respect to the respective part of the rail. It will also be clear that, in the examples, the magnetic field generator is arranged for generating a magnetic field extending exclusively in a predetermined direction with respect to the respective part of the rail.

It will be clear from the above, and from the Figures, that the measuring system, in particular the measuring coil of the measuring system, may have a predetermined orientation with respect to the respective part of the rail. It will also be clear that the measuring system, in particular the measuring coil of the measuring system, may have the same orientation with respect to the respective part of the rail as the magnetic field generator, in particular a turn of the magnetic field generator.

It will be clear from the above, and from the Figures, that the measuring system may be arranged for measuring the magnetic induction in a part of the rail in the direction of the magnetic field generated by the magnetic field generator. It will also be clear that, in the examples, the measuring system is arranged for measuring the magnetic induction in a part of the rail exclusively in the direction of the magnetic field generated by the magnetic field generator.

It will be clear from the above, and from the Figures, that the measuring system, in particular the measuring coil of the measuring system, may have a fixed orientation with respect to the respective part of the rail during the measurement of the magnetic induction. It will also be clear that the magnetic field generator, in particular a turn of the magnetic field generator, may have a fixed orientation with respect to the respective part of the rail during the determination of the response of the respective part of the rail to its being located in that magnetic field.

It will be clear from the above, and from the Figures, that, in the embodiments shown, the magnetic field generator and the measuring system are free from mechanical contact with the respective part of the rail. Thus, the magnetic field generator and the measuring system can be moved in the longitudinal direction of the rail while they are free from mechanical friction with the rail and associated wear.

Measuring a force acting on the magnetic field generator with the aid of an embodiment as described hereinabove for detecting mechanical stresses in a rail may be a so-called "Quickscan" which signals where in what positions great changes in stresses occur. These positions may then optionally be subjected to a more quantitative examination later, for instance with the aid of a magnetic field extending in a longitudinal direction of the rail.

As stated, the system may be provided with a mobile device MA for wheeling at least a part of the magnetic field generator and at least a part of the measuring system along the rail and optionally over the rail such that successive parts of the rail are successively located in the magnetic field and that the responses of these successive parts to their being located in the magnetic field can be determined.

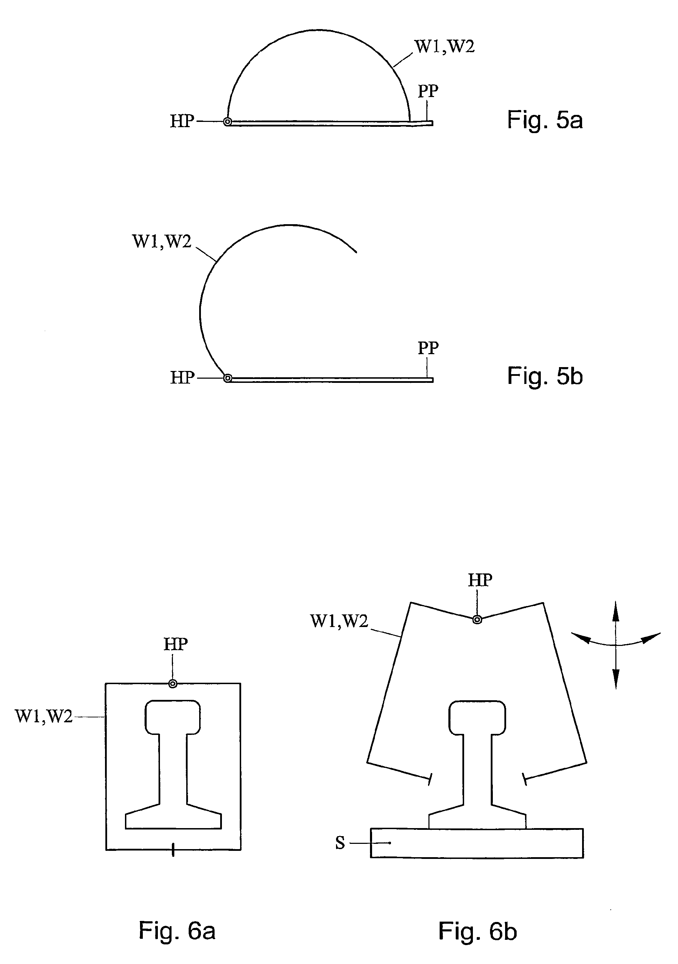

Figs. 5a and 5b, and Figs. 6a and 6b show examples of parts of a measuring system, namely one turn, or parts of a magnetic field generator MFP, also parts of one turn, which are movable substantially in a longitudinal direction of the respective part of the rail along a predetermined path. Here, it may hold that these parts of the magnetic field generator MFP or of the measuring system can be placed in a first relative position, such as for instance shown in Fig. 5a and Fig. 6a, and in at least one second relative position, such as for instance shown in Figs. 5b and 6b. In the first relative position, the respective parts may assume such a predetermined position with respect to a part R of a rail that part R of a rail can operatively be included in a predetermined magnetic field. Here, it will be clear that, in the first relative position, the magnetic field generator and/or the measuring system have a predetermined position and orientation with respect to the respective part R of the rail. In the at least one second relative position, a distance between the respective parts is such that direct replacement of the at least one turn with the parts again in the first position is possible at a part of another rail. In this context, "direct" is understood to mean that no winding activities of turns are necessary. It could also be stated that, in the at least one second position, a distance between the parts of the system in a predetermined direction is larger than the distance between those parts in the first relative position. In other words, for the turn as shown in Figs. 5a, 5b and Figs. 6a, 6b, it holds that the turn can be placed such that a field extending in a longitudinal direction of the rail can be generated. There where the rail is connected with a support, the turn can be temporarily interrupted, i.e. the respective parts can assume the second relative position as shown in Figs. 5b and 6b, in order to, for instance, move the turn from a part R located on one side of the support S to a position located on another side of the support S. Fig. 4 schematically shows a position of such a turn with respect to the rail R. In the examples shown in Figs. 5a, 5b and Figs. 6a, 6b, the respective parts remain connected with one another in both the first and the at least one second position. A hinge connection HP ensures that this connection exists and that the parts can assume both the first and the second position with respect to one another. As can be seen in Figs. 5a and 6a, the respective parts together form a continuous whole in the first relative position, which whole can also be considered as a whole closed upon itself. As can be seen in Figs. 5b and 6b, the respective parts form an interrupted whole in the second position. It will be clear that the respective parts can also be detachably connectable, so that they are, for instance, nor connected in the second relative position.

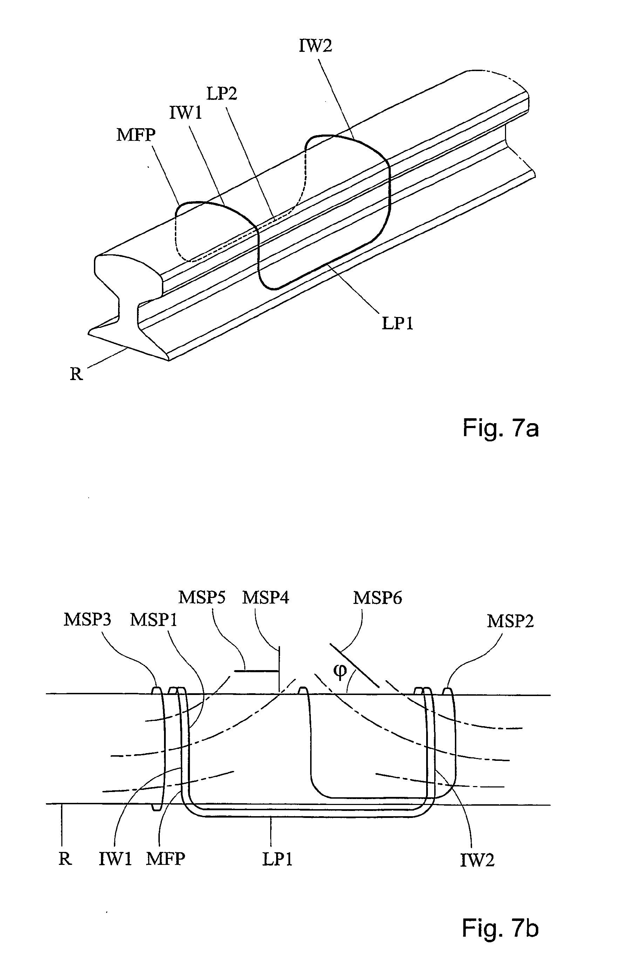

Figs. 7a and 7b schematically show a part of a seventh embodiment of the system according to the invention. In this example, the magnetic field generator MFP comprises a first incomplete electrically conductive turn IW1, in this example a substantially three-quarter turn, which partly enclosed the respective part of the rail R. The first incomplete turn is therefore arranged to be placed partly around the rail. In this example, the magnetic field generator MFP comprises a second incomplete electrically conductive turn IW2, in this example a substantially three-quarter turn, which partly encloses the respective part of the rail R. The second incomplete turn is therefore arranged to be placed partly around the rail. In Fig. 7a, the first and the second incomplete turn are mutually electrically conductively connected by a first and/or a second longitudinal part LP1, LP2 extending substantially in the longitudinal direction of the rail on either side of the rail.

Thus, in this example, the two incomplete turns IW1, IW2 and the longitudinal parts LP1, LP2 of the magnetic field generator together form a turn which at least partly encloses the respective part of the rail. If a current runs through the turn, each incomplete turn IW1, IW2 will generate a magnetic field, the magnetic field generated by the first turn IW1 being directed substantially opposite to the magnetic field generated by the second turn IW2. In order to effectively generate a magnetic field near the first and second turn IW1, IW2, the first turn and second turn are preferably placed at a distance from each other. Fig. 7b shows a side elevational view of the embodiment shown in Fig. 7a in which field lines of the magnetic fields are drawn as dash-dotted lines. Thus, the magnetic field generated by the magnetic field generator MFP has a predetermined direction with respect to the respective part of the rail. It will be clear that the magnetic field generator thus formed may also comprise a plurality of turns.

In the embodiment shown in Figs. 7a and 7b, the measuring system may comprise a measuring coil MSP. The measuring coil may, for instance, comprises an electrically conductive turn having a form similar to the form of the turn of the magnetic field generator MFP shown in Fig. 7a. In an embodiment, the measuring coil MSP1 is wound along with the turn of the magnetic field generator. Thus, the magnetic field generator MFP and the measuring coil MSP1 form a whole, as shown in Fig. 7b. In an alternative embodiment, a first incomplete turn of the measuring coil MSP2 is located between the first and the second incomplete turn IW1, IW2 of the magnetic field generator MFP in the longitudinal direction of the rail, in this example substantially in the middle between the first and the second incomplete turn IW1, IW2. A second incomplete turn of the measuring coil MSP2 is placed near the turn of the magnetic field generator MFP. In Fig. 7b, the second incomplete turn of the measuring coil MSP2 is placed outside the first and the second incomplete turn IW1, IW2, and it will be clear that the second incomplete turn of the measuring coil MSP2 may also be placed between the first and the second incomplete turn IW1, IW2. The measuring coil MSP2 and the turn of the magnetic field generator MFP both at least partly enclose the respective part of the rail R, see Fig. 7b.

The measuring system may also comprise a measuring coil MSP3 (see Fig. 7b) with a turn enclosing the respective part of the rail, for instance as described with reference to Figs. 1, 2, 5a, 5b, 6a and 6b. Preferably, the measuring coil MSP3 is located near the turn of the magnetic field generator MFP.

In an alternative embodiment, the measuring system comprises a first measuring coil MSP4 extending in a plane which is transverse to the respective part of the rail and a second measuring coil MSP5 extending in a plane extending in the longitudinal direction of the rail. In the example of Fig. 7b, both measuring coils MSP4, MSP5, are located above the head of the respective part of the rail. The first measuring coil MSP4 is used for measuring a first component of the magnetic induction in the longitudinal direction of the respective part of the rail, in this example the horizontal direction. The second measuring coil MSP5 is used for measuring a second component of the magnetic induction in a direction transverse to the longitudinal direction of the respective part of the rail, in this example the vertical direction. Here, the ratio of the first component and the second component of the magnetic induction is a measure for the presence of mechanical stress in the respective part of the rail. This ratio, also referred to as cotangent, is expressed as the first component divided by the second component. A reference cotangent can be determined as the cotangent determined on a reference rail which is free from mechanical stress. If the cotangent is determined on a part of a rail to be measured, it can be compared with the reference cotangent. On the basis of the fact that the measured cotangent is larger or smaller than the reference cotangent, it can be determined that a tensile stress or compressive stress is present in the respective part of the rail. If the measured cotangent is larger than the reference cotangent, for instance tensile stress may be present in the respective part of the rail. If the measured cotangent is smaller than the reference cotangent, for instance compressive stress may be present in the respective part of the rail. Preferably, the magnitude of the tensile stress or compressive stress which is present is determined on the basis of the extent to which the measured cotangent differs from the reference cotangent.

It will be clear that it is possible to carry out a calibration of a reference rail with a predetermined mechanical stress value, so that it is possible to determine an absolute mechanical stress on the basis of a determined cotangent.

In an alternative embodiment, the measuring system comprises a rotatably arranged measuring coil MSP6, see Fig. 7b. In this example, a centerline of the measuring coil MSP6 is located in a vertical plane through the longitudinal axis of the respective part of the rail. Preferably, the measuring coil MSP6 is provided with an angle indication for being able to determine the angle ϕ included by the measuring coil MSP6 and the longitudinal axis of the rail when the measuring coil MSP6 is positioned such that a minimal magnetic induction is measured. Here, the size of the angle ϕ is a measure for the presence of mechanical stress in the respective part of the rail. A reference angle can be determined if the angle determined on a reference rail is free from mechanical stress. If the angle is determined on a part of a rail to be measured, it can be compared with the reference angle. On the basis of the fact that the measured angle is larger or smaller than the reference angle, it can be determined that a tensile stress or compressive stress is present in the respective part of the rail. If the measured angle is smaller than the reference angle, for instance a tensile stress may be present in the respective part of the rail. If the measured angle is smaller than the reference cotangent, for instance compressive stress may be present in the respective part of the rail. Preferably, the magnitude of the tensile stress or compressive stress which is present is determined n the basis of the extent to which the measured angle differs from the reference angle.

It will be clear that it is possible to carry out a calibration on a reference rail with predetermined mechanical stress value, so that it is possible to determine an absolute mechanical stress on the basis of a determined angle. In the example, the angle ϕ included by the measuring coil MSP6 and the longitudinal axis of the rail is de termined when the measuring coil MSP6 is positioned such that a minimal magnetic induction is measured. It will be clear that it is also possible that the angle ϕ included by the measuring coil MSP6 and the longitudinal axis of the rail is determined when the measuring coil MSP6 is positioned such that a maximal magnetic induction is measured.

It will be clear that, in the example of Figs. 7a and 7b, the measuring system may also be provided with alternative sensors for measuring magnetic induction, such as for instance Hall sensors.

In general, the system may also be arranged for storing data for detecting the mechanical stress. To this end, the system may be provided with a so-called data storage DS, as shown in Fig. 4. The system may also be provided with a microprocessor (not shown) for quantitatively determining the presence of the mechanical stress in a part of the rail. Here, use can be made of a predetermined relation between the magnetization of a measured part of the rail and the stresses which is present in the rail.

The invention is by no means limited to the embodiments shown. Thus, it is possible that the plate part PP1 and the plate part PP2 are connected with each other and are included in one plate with which, with the aid of the complementary parts of the turn W1 and turn W2 of measuring coil MSP', respectively, the complete turn W1 and the complete turn W2 of measuring coil MSP can be formed, respectively. Thus, a plate part PP3 of the reference measuring coil RMSP may also be included in such a plate in which the plate parts PP1 and PP2 are included.

It is possible to have the whole system of a magnetic field generator and a measuring system substantially consist of two parts. In that case, the plate and the complementary parts of the respective turns can be connectable to one another in predetermined positions. In such an embodiment, it holds that the respective turns can be interrupted in two positions.

Incidentally, it holds that the predetermined field, as indicated hereinabove, does not necessarily need to be known. Herein, predetermined is at least understood to mean a field which is sufficiently strong to cause a magnetization of a part of the rail.

The transformer T is preferably a ring core transformer. Instead of one reference object, preferably use is made of two identical reference objects of which one is placed on either side of the rail. Thus, there is a well-defined symmetrical magnetization in the magnetic field and no correction for asymmetrical geometry needs to be take place. The respective reference measuring coils may, for instance, be connected in series.

In a special embodiment, the magnetic field generator is provided with a larger number of turns so that the current to be fed through can be relatively low. Alternatively, it is also possible that the magnetic field generator is provided with a small number of turns, for instance one or two turns, since this offers the advantage that the magnetic field generator can simply be provided at the respective part of the rail.

It has been found that the magnetizability in a rail decreases by about 8% per pressure increase of 100 Mpa. Incidentally, the sensitivity of the measurement depends on the type of rail.

The invention further relates to a method for at least detecting a mechanical stress in a part of a rail as described in the claims. The system described gives an example of a system with which such a method can be carried out.

Of course, many variants are possible without deviating from the use of the invention as defined in the appended claims.

## Claims

1. A system for at least detecting a mechanical stress in at least a part (R) of a rail, for instance a rail for guiding means of transport, on the basis of magnetizability of the respective part of a rail, wherein the system is provided with a magnetic field generator (MFP) for generating at least one predetermined changing magnetic field such that the respective part of a rail is located in that field, and is provided with a measuring system (MS) for measuring a response of the respective part of a rail to its being located in that magnetic field, wherein the magnetic field generator comprises at least one electrically conductive turn (W1,PP,PP1,IW1,IW2,LP1,LP2), **characterized in that** the at least one turn is arranged to be able to be placed at least partly around the rail.

2. A system according to claim 1, wherein the at least one turn (W1,PP,PP1) is arranged to be able to be placed around the rail.

3. A system according to claim 1 or 2, wherein at least a part of the turn comprises an electrically conductive plate part (PP,PP1).

4. A system according to claim 1, wherein the at least one turn comprises a first incomplete electrically conductive turn (IW1), arranged to be placed partly around the rail, and a second incomplete electrically conductive turn (IW2), arranged to be placed partly around the rail, the first and the second incomplete turn being mutually electrically conductively connected by a first and/or second longitudinal part (LP1,LP2) extending, in use, substantially in the longitudinal direction of the rail on either side of the rail.

5. A system according to claim 4, wherein the first and/or second incomplete electrically conductive turn is a substantially three-quarter turn.

6. A system according to any one of claims 2-5, wherein the measuring system (MS) is provided with a measuring coil (MSP) for measuring the magnetic induction in the respective part of the rail.

7. A system according to any one of the preceding claims, wherein the system is provided with at least one magnetizable reference object (RR) with a predetermined magnetizability.

8. A system according to any one of the preceding claims, wherein at least a part of the magnetic field generator (MFP) and at least a part of the measuring system (MS) are movable substantially in a longitudinal direction of a rail along a predetermined path such that successive parts of the rail are successively located in the magnetic field and that the responses of these successive parts on their being located in the magnetic field can be measured.

9. A system according to claim 8, wherein the system is arranged for moving at least a part of the magnetic field generator and at least a part of the measuring system along the predetermined path at a speed which is higher than a predetermined speed.

10. A system according to claim 9, wherein the predetermined speed is a minimum speed at which eddy currents occur in the rail.

11. A system according to any one of claims 5-10, wherein the measuring system (MS) is provided with a magnet which is movable in a longitudinal direction of the rail for at least detecting a force exerted on that movable magnet by the part of the rail located in the predetermined magnetic field.

12. A system according to any one of claims 5-11, wherein the measuring system (MS) is provided with a magnet which is movable in a transverse direction of the rail for at least detecting a force exerted on that movable magnet by the part of the rail located in the predetermined magnetic field.

13. A system according to claim 11 or 12, wherein the movably arranged magnet is connected with a spring for detecting the force.

14. A system according to any one of the preceding claims, wherein parts of the at least one turn can be placed in a first relative position and in at least one second relative position, wherein, in the first relative position, the parts can assume such a predetermined position with respect to a part of a rail that that part of a rail can operatively be included in a predetermined magnetic field, and wherein, in the at least one second relative position, direct replacement of the at least one turn with the parts again in the first relative position is possible at a part of another rail.

15. A system according to claim 14, wherein the respective parts of the at least one turn remain connected with one another in both the first position and the at least one second position.

16. A system according to claim 15, wherein the at least one turn comprises a hinge connection (HP).

17. A system according to any one of claims 14-16, wherein the respective parts of the at least one turn together form a continuous whole in the first relative position, and form an interrupted whole in the at least one second relative position.

18. A system according to any one of the preceding claims as far as dependent from claim 6, wherein parts of the measuring coil (MSP) can be placed in a first relative position and in at least one second relative position, wherein, in the first relative position, those parts can assume a predetermined position with respect to a part of the rail, and wherein, in the at least one second relative position, in a predetermined direction, a distance between the parts of the measuring system is larger than the distance between those parts in the first relative position.

19. A system according to claim 18, wherein the respective parts of the measuring coil (MSP) remain connected with one another in both the first position and in the at least one second position.

20. A system according to claim 19, wherein the measuring system comprises a hinge connection (HP).

21. A system according to any one of claims 18-20, wherein the respective parts of the measuring coil together form a continuous whole in the first relative position, and form an interrupted whole in the at least one second relative position.

22. A system according to any one of the preceding claims, wherein the system is provided with a speedometer (SPDM) for determining a speed of movement at which the predetermined magnetic field operatively moves in a longitudinal direction of the respective part of the rail.

23. A method for at least detecting a mechanical stress in at least a part (R) of a rail, for instance a rail for guiding means of transport, on the basis of magnetizability of the respective part of a rail, wherein the method comprises:
- generating at least one predetermined changing magnetic field such that the respective part of a rail is located in that field; and
- measuring a response of the respective part of a rail to its being located in that magnetic field
- using at least one electrically conductive turn (W1,PP,PP1,IW1,IW2,LP1,LP2), **characterized in that** the turn is arranged to be placed at least partly around the rail.

24. A method according to claim 23, wherein the turn (W1, PP,PP1) is arranged to be placed around the rail.

25. A method according to claim 23 or 24, wherein at least a part of the turn comprises an electrically conductive plate part (PP,PP1).

26. A method according to claim 23, wherein the at least one turn comprises a first incomplete electrically conductive turn (IW1), arranged to be placed partly around the rail, and a second incomplete electrically conductive turn (IW2), arranged to be placed partly around the rail, the first and the second incomplete turn being mutually electrically conductively connected by a first and/or second longitudinal part (LP1,LP2) extending, in use, substantially in the longitudinal direction of the rail on either side of the rail.

27. A method according to claim 26, wherein the first and/or second incomplete electrically conductive turn is a substantially three-quarter turn.

28. A method according to any one of claims 23-27, wherein the method comprises using at least one magnetizable reference object (RR) with a predetermined magnetizability.

29. A method according to claim 28, wherein the method comprises measuring a voltage over a measuring coil in which the reference object is included.

30. A method according to any one of claims 23-29, wherein the method comprises moving at least a part of the magnetic field generator and at least a part of the measuring system substantially in a longitudinal direction of the respective part of a rail along a predetermined path such that successive parts of the rail are successively located in the magnetic field and that the responses of these successive parts on their being located in the magnetic field can be determined.

31. A method according to claim 30, wherein the method comprises moving at least a part of the magnetic field generator and at least a part of the measuring system along the predetermined path at a speed which is higher than a predetermined speed.

32. A method according to claim 31, wherein the predetermined speed is the minimum speed at which eddy currents occur in the rail.

33. A method according to any one of claims 23-32, wherein the method comprises at least detecting a force exerted on a movable magnet arranged near the rail by the part of the rail located in the predetermined magnetic field.

34. A method according to claim 33, wherein the method comprises detecting a spring force.

35. A method according to any one of claims 23-34, wherein the method comprises measuring a speed of movement at which the predetermined magnetic field operatively moves in a longitudinal direction of the respective part of the rail.

## Patentansprüche

1. System, um mindestens eine mechanische Belastung in mindestens einem Teil (R) einer Schiene, beispielsweise eine Schiene zum Führen von Transportmitteln, auf der Basis der Magnetisierbarkeit des jeweiligen Teils einer Schiene zu erfassen, wobei das System mit einem Magnetfeldgenerator (MFP) versehen ist, um mindestens ein vorbestimmtes magnetisches Wechselfeld so zu erzeugen, dass sich der jeweilige Teil einer Schiene in diesem Feld befindet, und mit einem Messsystem (MS) versehen ist, um eine Antwort des jeweiligen Teils einer Schiene auf dessen Vorhandensein in diesem Magnetfeld zu messen, wobei der Magnetfeldgenerator mindestens eine elektrisch leitende Windung (W1, PP, PP1, IW1, IW2, LP1, LP2) aufweist, **dadurch gekennzeichnet, dass** die mindestens eine Windung ausgestaltet ist, um mindestens teilweise um die Schiene herum angeordnet werden zu können.

2. System nach Anspruch 1, bei dem die mindestens eine Windung (W1, PP, PP1) ausgestaltet ist, um um die Schiene herum angeordnet werden zu können.

3. System nach Anspruch 1 oder 2, bei dem mindestens ein Teil der Windung ein elektrisch leitendes Plattenteil (PP, PP1) aufweist.

4. System nach Anspruch 1, bei dem die mindestens eine Windung eine erste unvollständige elektrisch leitende Windung (IW1), die ausgestaltet ist, um teilweise um die Schiene herum angeordnet zu werden, und eine zweite unvollständige elektrisch leitende Windung (IW2) aufweist, die ausgestaltet ist, um teilweise um die Schiene herum angeordnet zu werden, wobei die erste und die zweite unvollständige Windung durch ein erstes und/oder zweites Längsteil (LP1, LP2) elektrisch leitend miteinander verbunden sind, die sich bei Verwendung im Wesentlichen in Längsrichtung der Schiene an beiden Seiten der Schiene erstrecken.

5. System nach Anspruch 4, bei dem die erste und/oder die zweite unvollständige elektrisch leitende Windung im Wesentlichen eine Dreiviertelwindung ist.

6. System nach einem der Ansprüche 2-5, bei dem das Messsystem (MS) mit einer Messspule (MSP) versehen ist, um die magnetische Induktion in dem jeweiligen Teil der Schiene zu messen.

7. System nach einem der vorhergehenden Ansprüche, bei dem das System mit mindestens einem magnetisierbaren Referenzobjekt (RR) versehen ist, das eine vorbestimmte Magnetisierbarkeit hat.

8. System nach einem der vorhergehenden Ansprüche, bei dem mindestens ein Teil des Magnetfeldgenerators (MFP) und mindestens ein Teil des Messsystems (MS) im Wesentlichen in einer Längsrichtung einer Schiene entlang eines vorbestimmten Pfades bewegbar sind, so dass sich aufeinanderfolgende Teile der Schiene nacheinander in dem Magnetfeld befinden und dass die Antworten dieser aufeinanderfolgenden Teile auf deren Vorhandensein in dem Magnetfeld gemessen werden können.

9. System nach Anspruch 8, bei dem das System ausgestaltet ist, um mindestens einen Teil des Magnetfeldgenerators und mindestens einen Teil des Messsystems entlang des vorbestimmten Pfades mit einer Geschwindigkeit zu bewegen, die größer ist als eine vorbestimmte Geschwindigkeit.

10. System nach Anspruch 9, bei dem die vorbestimmte Geschwindigkeit eine minimale Geschwindigkeit ist, bei der in der Schiene Wirbelströme auftreten.

11. System nach einem der Ansprüche 5-10, bei dem das Messsystem (MS) mit einem Magneten versehen ist, der in einer Längsrichtung der Schiene bewegbar ist, um mindestens eine Kraft zu erfassen, die auf den bewegbaren Magneten durch den Teil der Schiene aufgebracht wird, der sich in dem vorbestimmten Magnetfeld befindet.

12. System nach einem der Ansprüche 5-11, bei dem das Messsystem (MS) mit einem Magneten versehen ist, der in einer Querrichtung der Schiene bewegbar ist, um mindestens eine Kraft zu erfassen, die auf den bewegbaren Magneten durch den Teil der Schiene aufgebracht wird, der sich in dem vorbestimmten Magnetfeld befindet.

13. System nach Anspruch 11 oder 12, bei dem der bewegbar angeordnete Magnet mit einer Feder verbunden ist, um die Kraft zu erfassen.

14. System nach einem der vorhergehenden Ansprüche, bei dem Teile der mindestens einen Windung in einer ersten Relativposition und in mindestens einer zweiten Relativposition angeordnet werden können, wobei, in der ersten Relativposition, die Teile eine solche vorbestimmte Position bezüglich eines Teils einer Schiene einnehmen können, dass dieser Teil einer Schiene funktional in einem vorbestimmten Magnetfeld positioniert sein kann, und wobei, in der mindestens einen zweiten Relativposition, eine direkte Verlagerung der mindestens einen Windung, wobei sich die Teile wieder in der ersten Relativposition befinden, an einem Teil einer anderen Schiene möglich ist.

15. System nach Anspruch 14, bei dem die jeweiligen Teile der mindestens einen Windung in sowohl der ersten Position als auch in der mindestens einen zweiten Position miteinander verbunden bleiben.

16. System nach Anspruch 15, bei dem die mindestens eine Windung eine Gelenkverbindung (HP) umfasst.

17. System nach einem der Ansprüche 14-16, bei dem die jeweiligen Teile der mindestens einen Windung in der ersten relativen Position zusammen ein kontinuierliches Ganzes bilden und in der mindestens einen zweiten Relativposition ein unterbrochenes Ganzes bilden.

18. System nach einem der vorhergehenden Ansprüche, sofern von Anspruch 6 abhängig, bei dem Teile der Messspule (MSP) in einer ersten Relativposition und in mindestens einer zweiten Relativposition positioniert werden können, wobei, in der ersten Relativposition, diese Teile eine vorbestimmte Position bezüglich eines Teils der Schiene einnehmen können und wobei, in der mindestens einen zweiten Relativposition, in einer vorbestimmten Richtung eine Distanz zwischen den Teilen des Messsystems größer ist als die Distanz zwischen diesen Teilen in der ersten Relativposition.

19. System nach Anspruch 18, bei dem die jeweiligen Teile der Messspule (MSP) sowohl in der ersten Position als auch in der mindestens einen zweiten Position miteinander verbunden bleiben.

20. System nach Anspruch 19, bei dem das Messsystem eine Gelenkverbindung (HP) umfasst.

21. System nach einem der Ansprüche 18-20, bei dem die jeweiligen Teile der Messspule in der ersten Relativposition zusammen ein kontinuierliches Ganzes bilden und in der mindestens einen zweiten Relativposition ein unterbrochenes Ganzes bilden.

22. System nach einem der vorhergehenden Ansprüche, bei dem das System mit einem Tachometer (SPDM) versehen ist, um eine Geschwindigkeit der Bewegung zu bestimmen, mit der sich das vorbestimmte Magnetfeld funktional in einer Längsrichtung des jeweiligen Teils der Schiene bewegt.

23. Verfahren, um mindestens eine mechanische Belastung in mindestens einem Teil (R) einer Schiene, beispielsweise eine Schiene zum Führen von Transportmitteln, auf der Basis der Magnetisierbarkeit des jeweiligen Teils einer Schiene zu erfassen, wobei das Verfahren umfasst:
- Erzeugen von mindestens einem vorbestimmten magnetischen Wechselfeld, so dass sich der jeweilige Teil einer Schiene sich in diesem Feld befindet; und
- Messen einer Antwort des jeweiligen Teils einer Schiene auf dessen Vorhandensein in diesem Magnetfeld;
- Verwenden von mindestens einer elektrisch leitenden Windung (W1, PP, PP1, IW1, IW2, LP1, LP2), **dadurch gekennzeichnet, dass** die Windung ausgestaltet ist, um mindestens teilweise um die Schiene herum angeordnet werden zu können.

24. Verfahren nach Anspruch 23, bei dem die Windung (W1, PP, PP1) ausgestaltet ist, um um die Schiene angeordnet werden zu können.

25. Verfahren nach Anspruch 23 oder 24, bei dem mindestens ein Teil der Windung ein elektrisch leitendes Plattenteil (PP, PP1) aufweist.

26. Verfahren nach Anspruch 23, bei dem die mindestens eine Windung eine erste unvollständige elektrisch leitende Windung (IW1), die ausgestaltet ist, um teilweise um die Schiene herum angeordnet zu werden, und eine zweite unvollständige elektrisch leitende Windung (IW2) aufweist, die ausgestaltet ist, um teilweise um die Schiene herum angeordnet zu werden, wobei die erste und die zweite unvollständige Windung durch ein erstes und/oder zweites Längsteil (LP1, LP2) elektrisch leitend miteinander verbunden sind, die sich der Verwendung im Wesentlichen in Längsrichtung der Schiene an beiden Seiten der Schiene erstrecken.

27. Verfahren nach Anspruch 26, bei dem die erste und/oder die zweite unvollständige elektrisch leitende Windung im Wesentlichen eine Dreiviertelwindung ist.

28. Verfahren nach einem der Ansprüche 23-27, wobei das Verfahren die Verwendung von mindestens einem magnetisierbaren Referenzobjekt (RR) umfasst, das eine vorbestimmte Magnetisierbarkeit hat.

29. Verfahren nach Anspruch 28, wobei das Verfahren das Messen einer Spannung über einer Messspule umfasst, in dem das Referenzobjekt enthalten ist.

30. Verfahren nach einem der Ansprüche 23-29, wobei das Verfahren das Bewegen von mindestens einem Teil des Magnetfeldgenerators und von mindestens einem Teil des Messsystems im Wesentlichen in einer Längsrichtung des jeweiligen Teils einer Schiene entlang eines vorbestimmtes Pfades umfasst, so dass sich aufeinanderfolgende Teile der Schiene nacheinander in dem Magnetfeld befinden und dass die Antworten dieser aufeinanderfolgenden Teile auf deren Vorhandensein in dem Magnetfeld bestimmt werden können.

31. Verfahren nach Anspruch 30, wobei das Verfahren das Bewegen von mindestens einem Teil des Magnetfeldgenerators und von mindestens einem Teil des Messsystems entlang des vorbestimmten Pfades mit einer Geschwindigkeit umfasst, die größer ist als eine vorbestimmte Geschwindigkeit.

32. Verfahren nach Anspruch 31, bei dem die vorbestimmte Geschwindigkeit die minimale Geschwindigkeit ist, bei der in der Schiene Wirbelströme auftreten.

33. Verfahren nach einem der Ansprüche 23-32, wobei das Verfahren mindestens das Erfassen einer Kraft umfasst, die auf einen bewegbaren Magneten, der nahe der Schiene angeordnet ist, durch den Teil der Schiene aufgebracht wird, der sich in dem vorbestimmten Magnetfeld befindet.

34. Verfahren nach Anspruch 33, wobei das Verfahren das Erfassen einer Federkraft umfasst.

35. Verfahren nach einem der Ansprüche 23-34, wobei das Verfahren das Messen einer Geschwindigkeit der Bewegung umfasst, mit der sich das vorbestimmte Magnetfeld funktional in einer Längsrichtung des jeweiligen Teils der Schiene bewegt.

## Revendications

1. Système permettant au moins de détecter une contrainte mécanique dans au moins une partie (R) d'un rail, par exemple un rail servant à guider un moyen de transport, en fonction de l'aptitude à l'aimantation de la partie de rail respective, dans lequel le système est équipé d'un générateur de champ magnétique (MFP) pour générer au moins un champ magnétique variable prédéterminé de telle façon que la partie de rail respective est située dans ce champ, et équipé d'un système de mesure (MS) pour mesurer une réponse de la partie de rail respective au fait qu'elle est située dans ce champ magnétique, dans lequel le générateur de champ magnétique comprend au moins une spire électriquement conductrice (W1, PP, PP1, IW1, IW2, LP1, LP2), **caractérisé en ce que** ladite au moins une spire est agencée de manière à pouvoir être placée au moins en partie autour du rail.

2. Système selon la revendication 1, dans lequel ladite au moins une spire (W1, PP, PP1) est adaptée pour pouvoir être placée autour du rail.

3. Système se Ion la revendication 1 ou la revendication 2, dans lequel une partie au moins de la spire comprend une partie de plaque électriquement conductrice (PP, PP1).

4. Système selon la revendication 1, dans lequel ladite au moins une spire comprend une première spire électriquement conductrice incomplète (IW1), adaptée pour être placée en partie autour du rail, et une deuxième spire électriquement conductrice incomplète (IW2), adaptée pour être placée en partie autour du rail, les première et deuxième spires incomplètes étant reliées l'une à l'autre de manière électriquement conductrice par une première et/ou une deuxième partie longitudinale (LP1, LP2) qui, à l'utilisation, s'étend sensiblement dans le sens longitudinal du rail de part et d'autre de ce dernier.

5. Système selon la revendication 4, dans lequel la première et/ou la deuxième spire électriquement conductrice incomplète est sensiblement égale à trois quarts de spire.

6. Système selon l'une quelconque des revendications 2 à 5, dans lequel le système de mesure (MS) est équipé d'une bobine de mesure (MSP) pour mesurer l'induction magnétique dans la partie de rail respective.

7. Système selon l'une quelconque des revendications précédentes, dans lequel le système est équipé d'au moins un objet de référence aimantable (RR) ayant une aptitude à l'aimantation prédéterminée.

8. Système selon l'une quelconque des revendications précédentes, dans lequel une partie au moins du générateur de champ magnétique (MFP) et une partie au moins du système de mesure (MS) sont mobiles dans une direction sensiblement longitudinale d'un rail le long d'un trajet prédéterminé de façon à placer des parties successives du rail les unes après les autres dans le champ magnétique et à mesurer les réponses de ces parties successives lorsqu'elles sont situées dans le champ magnétique.

9. Système selon la revendication 8, dans lequel le système est adapté pour déplacer une partie au moins du générateur de champ magnétique et une partie au moins du système de mesure le long du trajet prédéterminé à une vitesse qui est supérieure à une vitesse prédéterminée.

10. Système selon la revendication 9, dans lequel la vitesse prédéterminée est une vitesse minimum à laquelle des courants de Foucault apparaissent dans le rail.

11. Système selon l'une quelconque des revendications 5 à 10, dans lequel le système de mesure (MS) est équipé d'un aimant qui est mobile dans une direction longitudinale du rail afin au moins de détecter une force exercée sur ledit aimant mobile par la partie du rail située dans le champ magnétique prédéterminé.

12. Système selon l'une quelconque des revendications 5 à 11, dans lequel le système de mesure (MS) est équipé d'un aimant qui est mobile dans une direction transversale du rail afin au moins de détecter une force exercée sur ledit aimant mobile par la partie du rail située dans le champ magnétique prédéterminé.

13. Système selon la revendication 11 ou la revendication 12, dans lequel l'aimant mobile est relié à un ressort pour détecter la force.

14. Système selon l'une quelconque des revendications précédentes, dans lequel des parties de ladite au moins une spire peuvent être placées dans une première position relative et dans au moins une deuxième position relative, dans lequel, dans la première position relative, les parties peuvent prendre une position prédéterminée par rapport à une partie d'un rail telle que cette partie de rail peut être incluse de manière opérante dans un champ magnétique prédéterminé, et dans lequel, dans ladite au moins une deuxième position relative, il est possible de replacer directement ladite au moins une spire avec les parties à nouveau dans la première position relative dans une partie d'un autre rail.

15. Système selon la revendication 14, dans lequel les parties respectives de ladite au moins une spire restent reliées les unes aux autres à la fois dans la première position et dans ladite au moins une deuxième position.

16. Système selon la revendication 15, dans lequel ladite au moins une spire comprend une liaison articulée (HP).

17. Système selon l'une quelconque des revendications 14 à 16, dans lequel les parties respectives conjointes de ladite au moins une spire forment un ensemble continu dans la première position relative et forment un ensemble interrompu dans ladite au moins une deuxième position relative.

18. Système selon l'une quelconque des revendications précédentes, à condition qu'elle soit dépendante de la revendication 6, dans lequel des parties de la bobine de mesure (MSP) peuvent être placées dans une première position relative et dans au moins une deuxième position relative, dans lequel, dans la première position relative, ces parties peuvent adopter une position prédéterminée par rapport à une partie du rail, et dans lequel, dans ladite au moins une deuxième position relative, dans une direction prédéterminée, une distance entre les parties du système de mesure est plus grande que la distance entre ces parties dans la première position relative.

19. Système selon la revendication 18, dans lequel les parties respectives de la bobine de mesure (MSP) restent reliées les unes aux autres à la fois dans la première position et dans ladite au moins une deuxième position.

20. Système selon la revendication 19, dans lequel le système de mesure comprend une liaison articulée (HP).

21. Système selon l'une quelconque des revendications 18 à 20, dans lequel les parties respectives conjointes de la bobine de mesure forment un ensemble continu dans la première position relative et forment un ensemble interrompu dans ladite au moins une deuxième position relative.

22. Système selon l'une quelconque des revendications précédentes, dans lequel le système est équipé d'un indicateur de vitesse (SPDM) pour déterminer une vitesse de déplacement à laquelle le champ magnétique prédéterminé se déplace de manière opérante dans une direction longitudinale de la partie de rail respective.

23. Procédé permettant au moins de détecter une contrainte mécanique dans au moins une partie (R) d'un rail, par exemple un rail servant à guider un moyen de transport, en fonction de l'aptitude à l'aimantation de la partie de rail respective, dans lequel le procédé comprend :
- la génération d'au moins un champ magnétique variable prédéterminé de façon que la partie de rail respective soit située dans ce champ ;
- la mesure d'une réponse de la partie de rail respective lorsqu'elle est située dans ce champ magnétique ; et
- l'utilisation d'au moins une spire électriquement conductrice (W1, PP, PP1, IW1, IW2, LP1, LP2), **caractérisé en ce que** la spire est adaptée pour être placée au moins en partie autour du rail.

24. Procédé selon la revendication 23, dans lequel la spire (W1, PP, PP1) est adaptée pour être placée autour du rail.

25. Procédé selon la revendication 23 ou 24, dans lequel au moins une partie de la spire comprend une partie de plaque électriquement conductrice (PP, PP1).

26. Procédé selon la revendication 23, dans lequel ladite au moins une spire comprend une première spire électriquement conductrice incomplète (IW1), adaptée pour être placée en partie autour du rail, et une deuxième spire électriquement conductrice incomplète (IW2), adaptée pour être placée en partie autour du rail, les première et deuxième spires incomplètes étant reliées l'une à l'autre de manière électriquement conductrice par une première et/ou une deuxième partie longitudinale (LP1, LP2) qui, à l'utilisation, s'étend sensiblement dans le sens longitudinal du rail de part et d'autre de ce dernier.

27. Procédé selon la revendication 26, dans lequel la première et/ou la deuxième spire électriquement conductrice incomplète est sensiblement égale à trois quarts de spire.

28. Procédé selon l'une quelconque des revendications 23 à 27, dans lequel le procédé comprend l'utilisation d'au moins un objet de référence aimantable (RR) ayant une aptitude à l'aimantation prédéterminée.

29. Procédé selon la revendication 28, dans lequel le procédé comprend la mesure d'une tension aux bornes d'une bobine de mesure dans laquelle l'objet de référence est inclus.

30. Procédé selon l'une quelconque des revendications 23 à 29, dans lequel le procédé comprend le déplacement d'au moins une partie du générateur de champ magnétique et d'au moins une partie du système de mesure dans une direction sensiblement longitudinale d'un rail le long d'un trajet prédéterminé de façon à placer des parties successives du rail les unes après les autres dans le champ magnétique et à déterminer les réponses de ces parties successives lorsqu'elles sont situées dans le champ magnétique.

31. Procédé selon la revendication 30, dans lequel le procédé comprend le déplacement d'au moins une partie du générateur de champ magnétique et d'au moins une partie du système de mesure le long du trajet prédéterminé à une vitesse qui est supérieure à une vitesse prédéterminée.

32. Procédé selon la revendication 31, dans lequel la vitesse prédéterminée est la vitesse minimum à laquelle des courants de Foucault apparaissent dans le rail.

33. Procédé selon l'une quelconque des revendications 23 à 32, dans lequel le procédé comprend au moins la détection d'une force exercée sur un aimant mobile disposé à proximité du rail par la partie du rail située dans le champ magnétique prédéterminé.

34. Procédé selon la revendication 33, dans lequel le procédé comprend la détection de la force d'un ressort.

35. Procédé selon l'une quelconque des revendications 23 à 34, dans lequel le procédé comprend la mesure d'une vitesse de déplacement à laquelle le champ magnétique prédéterminé se déplace de manière opérante dans une direction longitudinale de la partie de rail respective.
